# EUROPÄISCHE PATENTSCHRIFT

(11) **EP 0 975 112 B1**
(45) Veröffentlichungstag und Bekanntmachung des Hinweises auf die Patenterteilung: **12.09.2007**
(21) Anmeldenummer: 99113313.3
(22) Anmeldetag: 09.07.1999
(51) Int. Cl.: G06F 1/10, H04J 3/06, H04Q 11/04

(54) **Verfahren zur Synchronisation externer Komponenten einer Vermittlungseinrichtung über Taktausgänge**
Method for synchronising external elements of a switching device using clock outputs
Méthode de synchronisation d'éléments externes à un dispositif de commutation par des sorties d'horloge

(30) Priorität: 24.07.1998 DE 19833282
(43) Veröffentlichungstag der Anmeldung: 26.01.2000
(73) Patentinhaber: Tenovis GmbH & Co. KG, 60362 Frankfurt am Main (DE)
(72) Erfinder: Diehl, Rolf, 55578 Wallertheim (DE); Sulzbacher, Martina, 64625 Bensheim (DE)
(74) Vertreter: Walkenhorst, Andreas

(56) Entgegenhaltungen:
- EP-A- 0 530 393
- EP-A- 0 583 612
- DE-C- 4 131 061
- US-A- 5 577 075

## Beschreibung

### Stand der Technik

Die Erfindung geht aus von einer Anordnung zur Synchronisation von externen Komponenten einer Vermittlungseinrichtung. Bestehende Vermittlungseinrichtungen, insbesondere Nebenstellenanlagen, weisen Taktausgänge auf, die immer daueraktiv geschaltet sind. Um eine Verbindung zu einer angeschlossenen externen Komponente zu unterbrechen, muß das Zuleitungskabel oder die entsprechende Anschlußbaugruppe gezogen werden.

Das Dokument US-A-5 577 075 offenbart einen Mechanismus zur Synchronisation mehrerer verteilten Vermittlungsstellen, wobei jede Vermittlungsstelle als Master- oder Slave-Taktgeber auftreten kann. Jede Vermittlungsstelle verfügt über einen Mechanismus zur Selektion des Takts mit der höchsten Güte oder Qualität.

### Vorteile der Erfindung

Mit den Maßnahmen gemäß den Merkmalen des Anspruchs 1 beziehungsweise den Ausgestaltungen aufzeigenden Unteransprüchen ist es möglich, Taktausgänge danach zu unterscheiden, welche Art von externen Komponenten anschließbar sind. Die Steuerung der Taktausgänge erfolgt abhängig von ihrer Funktion, insbesondere durch die zentrale Steuerung der Vermittlungseinrichtung. Alle Arten von Taktausgängen können manuell, beispielsweise über ein Serviceprogramm schaltbar sein. Für eine Art von Taktausgängen ist eine automatische An- bzw. Abschaltung möglich, so daß zur Deaktivierung kein Ziehen von Kabeln oder Anschlußbaugruppen notwendig ist. Für externe Komponenten, die von der Synchronisation in einem Anlagenverbund abhängig sind, wie zum Beispiel Multiplexer für die Datenübertragung, bedeutet eine automatische Steuerung (An- bzw. Abschalten) eine genauere und zuverlässigere Funktionsweise.

### Zeichnungen

Anhand der Zeichnungen werden Ausführungsbeispiele der Erfindung näher erläutert. Es zeigen
Figur 1 den Anschluß von externen Komponenten an eine Vermittlungseinrichtung über Taktausgänge,
Figur 2 ein Anlagenverbund von Vermittlungseinrichtungen mit angeschlossenen externen Komponenten.

### Beschreibung von Ausführungsbeispielen

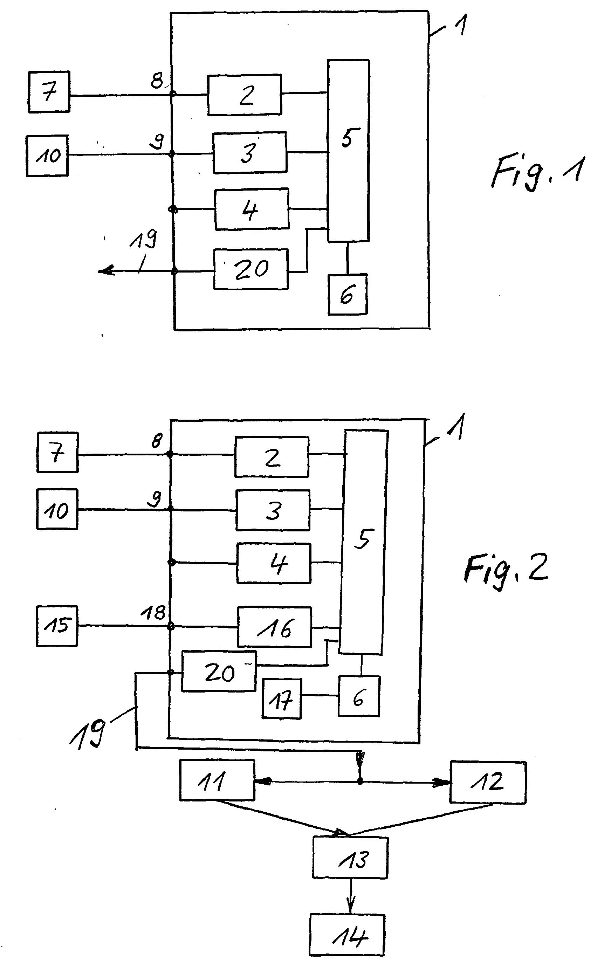

Figur 1 zeigt schematisch eine Vermittlungseinrichtung 1, z.B. eine Nebenstellenanlage, mit mehreren Anschlußbaugruppen 2, 3 für externe Komponenten 7, 10, beispielsweise externe Multiplexer, Antennen, mit mehreren Anschlußbaugruppen 4, 20 für externe Komponenten, beispielsweise Teilnehmerendeinrichtungen oder Amts- bzw. Verbundleitungen z.B. 19, einem Koppelnetzwerk 5 sowie einer zentralen Steuerung 6. Externe Komponenten 7, 10 sind über Taktausgänge 8, 9 an Anschlußbaugruppen - hier Anschlußbaugruppen 2 und 3 - angeschlossen. Für den Anschluß externer Komponenten sind mehrere Anschlüsse pro Vermittlungseinrichtung oder Anschlußbaugruppe möglich.

Eine Anschlußbaugruppe teilt bei Ihrer Inbetriebnahme (Anmeldung) der zentralen Steuerung 6 mit, daß auf ihr Taktausgänge vorhanden sind und auch welche Art von Taktausgängen. Die Taktausgänge sollen danach unterschieden werden, welche Art von externen Komponenten 7, 10 angeschlossen sind. Es werden hier zumindest zwei Arten von externen Komponenten und damit auch zwei Arten von Taktausgängen unterschieden. Alle Arten von Taktausgängen sollen manuell z. B. über ein Serviceprogramm schaltbar sein. Weiterhin erfolgt für eine bestimmte Art von Taktausgängen, die von ihrer Funktion abhängt, eine automatische Steuerung, das heißt insbesondere ein An- bzw. Abschalten von der zentralen Steuerung 6 der Vermittlungseinrichtung 1 aus, beispielsweise durch eine entsprechende Anlagensoftware.

Die Art des Taktausganges wird jeweils durch einen bestimmten Anschlußorgan-Typ der anschließbaren externen Komponenten definiert. Aufgrund dieses Anschlußorgan-Typs des Taktausganges stellt die zentrale Steuerung 6 fest, ob für diesen Taktausgang eine automatische Steuerung (An- bzw. Abschaltung) erforderlich ist oder nicht. Die automatische An- und Abschaltung der Taktausgänge wird von der zentralen Steuerung 6 eingeleitet. Diese Steuerung stellt fest, wann die Taktausgänge aktiviert bzw. deaktiviert werden sollen.

Für die Steuerung der Taktausgänge in Abhängigkeit ihrer Funktion ist eine automatische und/oder manuelle Schaltung möglich. Für externe Komponenten 7, die von der Synchronistation der Vermittlungsanlagen im Anlagenverbund (Figur 2) abhängig sind, wie z. B. Multiplexer für die Datenübertragung, bedeutet die automatische Steuerung (An- bzw. Abschaltung)eine genauere Funktionsweise. Aber auch für externe Komponenten 10, die davon unabhängig sind, z.B. Antennen, werden mit dem Anlagentakt synchronisiert.

Ist eine Vermittlungseinrichtung 1 gemäß Figur 2 für weitere Vermittlungseinrichtungen 11, 12, 13, 14 in einem Anlagenverbund Taktmaster, das heißt die anderen Vermittlungseinrichtungen 11, 12, 13, 14 leiten von ihr den Takt ab, werden die Taktausgänge, die von der Synchronisation im Anlagenverbund abhängen, aktiviert. Ist die Vermittlungseinrichtung 1 Stand-alone, das heißt es sind keine Nachbar-Vermittlungseinrichtungen angeschlossen, oder sie ist Taktslave, das heißt sie leitet von einer anderen Vermittlungseinrichtung den Takt ab, dann müssen diese Taktausgänge deaktiviert werden.

Bei der Ausgestaltung nach Figur 2 wird dem an die Vermittlungseinrichtung 1 angeschlossenen externen Taktgenerator 15 der Vorrang als Taktnormal für den Anlagenverbund gegeben unabhängig davon, ob die Vermittlungseinrichtungen 11, 12, 13 oder 14 über andere Taktquellen zur Synchronisation verfügen, wie beispielsweise den Amtstakt über eine DIVO (digitale Vermittlung, Ort) - Leitung.

Damit ein an eine Anschlußbaugruppe - hier 16 - angeschlossener externer Taktgenerator 15 von der zentralen Steuerung 6 erkannt werden kann, muß die Anschlußbaugruppe, z.B. durch ein Serviceprogramm, entsprechend konfigurierbar ausgebildet sein. Dabei wird aufgrund des Anschlußorgan-Typs des Takteingangs 18 festgelegt, daß es sich um einen externen Taktgenerator handelt. Sobald die Anschlußbaugruppe 16 feststellt, daß der externe Taktgenerator 15 einen Takt liefert, meldet sie dies der zentralen Steuerung. Der Steuerung 6 ist eine Auswertelogik 17 zugeordnet für die Auswahl des Synchronisationstaktes. Liefert der externe Taktgenerator 15 einen Takt, wird diesem der Vorrang als Taktnormal vor beispielsweise einem DIVO-Anschluß gegeben. Den weiteren Vermittlungseinrichtungen 11, 12, 13, 14 wird insbesondere über einen Signalisierungskanal in der Verbundleitung am Ausgang 19, z.B. den D-Kanal im ISDN, mitgeteilt, daß der externe Taktgenerator 15 als Taktnormal für Synchronisationszwecke zur Verfügung steht. Dem externen Taktgenerator 15 wird nun unabhängig davon, an welcher der Vermittlungseinrichtungen er angeschlossen ist, der Vorrang als Taktnormal zur Synchronisation für die übrigen Vermittlungseinrichtungen des Verbundes eingeräumt, so daß sich alle Vermittlungseinrichtungen auf die Vermittlungseinrichtung mit angeschlossenem externen Taktgenerator synchronisieren, auch wenn sie einen eigenen DIVO-Anschluß aufweisen.

Externe Komponenten können so auf einfache Weise auf ein sehr genaues Taktnormal des Anlagenverbundes synchronisiert werden.

## Patentansprüche

1. Anordnung zur Synchronisation von externen Komponenten (7, 10) einer Vermittlungseinrichtung (1) über deren Taktausgänge (8, 9), **gekennzeichnet, durch** Taktausgänge (8) zumindest einer Art, die in Abhängigkeit von ihrer Funktion von der Vermittlungseinrichtung (1) aus an- oder abschaltbar ist.

2. Anordnung nach Anspruch 1, mit Taktausgänge (8, 9) zweier Arten , wobei beide Arten manuell schaltbar sind und eine Art von Taktausgängen (8) automatisch von einer zentralen Steuerung (6) der Vermittlungseinrichtung (1) aus an- und abschaltbar ist.

3. Anordnung nach Anspruch 1 oder 2, **dadurch gekennzeichnet, daß** die Taktausgänge einer Art (8) dann aktivierbar sind, wenn die Vermittlungseinrichtung (1) in einem Anlagenverbund als Taktmaster arbeitet.

4. Anordnung nach Anspruch 1 oder 2, **dadurch gekennzeichnet, daß** die Taktausgänge (8) einer Art dann deaktivierbar sind, wenn sie im Stand-alone Betrieb oder in einem Anlagenverbund als Taktslave arbeiten.

5. Anordnung nach einem der Ansprüche 1 bis 4, **dadurch gekennzeichnet, daß** die Taktausgänge (B, 9) an einer Anschlußbaugruppe (2, 3) der Vermittlungseinrichtung vorgesehen sind, wobei bei Inbetriebnahme einer Anschlußbaugruppe (3) einer zentralen Steuerung (6) der Vermittlungseinrichtung (1) mitgeteilt wird, daß auf ihr Taktausgänge vorgesehen sind sowie auch welche Art von Taktausgänge.

6. Anordnung nach einem der Ansprüche 1 bis 5, **dadurch gekennzeichnet, daß** die Art eines Taktausganges von seinem Anschlußorgan-Typ abhängig ist, welcher wiederum von der Art der angeschlossenen externen Komponente (7, 10) abhängig ist.

7. Anordnung nach einem der Ansprüche 1 bis 6, **dadurch gekennzeichnet, daß** für externe Komponenten (7), die von der Synchronisation der Vermittlungseinrichtung (1) in einem Anlagenverbund abhängig sind, eine automatische Steuerung des an sie anschließbaren jeweiligen Taktausganges (8) vorgesehen ist.

## Claims

1. Arrangement for synchronizing external components (7, 10) of a switching device (1) using the clock outputs (8, 9) thereof, **characterized by** clock outputs (8) of at least one type which can be connected or disconnected from the switching device (1) depending on their function.

2. Arrangement according to Claim 1, having clock outputs (8, 9) of two types, in which case both types can be manually switched and one type of clock outputs (8) can be automatically connected and disconnected from a central controller (6) of the switching device (1).

3. Arrangement according to Claim 1 or 2, **characterized in that** the clock outputs (8) of one type can be activated when the switching device (1) operates as a clock master in a system group.

4. Arrangement according to Claim 1 or 2, **characterized in that** the clock outputs (8) of one type can be deactivated when they operate in the stand-alone mode or as a clock slave in a system group.

5. Arrangement according to one of Claims 1 to 4, **characterized in that** the clock outputs (8, 9) are provided on a subscriber line module (2, 3) of the switching device, in which case, when a subscriber line module (3) is started, a central controller (6) of the switching device (1) is informed that clock outputs have been provided on it and is also informed of the type of clock outputs.

6. Arrangement according to one of Claims 1 to 5, **characterized in that** the type of a clock output depends on its connecting element which in turn depends on the type of external component (7, 10) connected.

7. Arrangement according to one of Claims 1 to 6, **characterized in that**, for external components (7) which depend on the synchronization of the switching device (1) in a system group, the respective clock output (8) which can be connected to said components is controlled automatically.

## Revendications

1. Dispositif de synchronisation d'éléments (7, 10) externes d'un dispositif (1) de commutation par ses sorties (8, 9) d'horloge, **caractérisé par** des sorties (8) d'horloge au moins d'un type qui, en fonction de son fonctionnement, peut être branché ou débranché par le dispositif (1) de commutation.

2. Dispositif suivant la revendication 1, comprenant des sorties (9, 9) d'horloge d'un deuxième type, les deux types pouvant être commutés manuellement et un type de sorties (8) d'horloge pouvant être branché et débranché automatiquement par une commande (6) centrale du dispositif (1) de commutation.

3. Dispositif suivant la revendication 1 ou 2, **caractérisé en ce que** les sorties (8) d'horloge d'un type peuvent être activées lorsque le dispositif (1) de commutation travaille comme maître d'horloge dans une installation complexe.

4. Dispositif suivant la revendication 1 ou 2, **caractérisé en ce que** les sorties (8) d'horloge d'un type peuvent être déactivées lorsqu'elles opèrent comme esclave d'horloge dans le fonctionnement stand-alone ou dans une installation complexe.

5. Dispositif suivant l'une des revendications 1 à 4, **caractérisé en ce que** les sorties (8, 9) d'horloge sont prévues sur un module (2,3) de connexion du dispositif de commutation, dans lequel, lors de la mise en fonctionnement d'un module (3) de connexion, une commande (6) centrale fait part au dispositif (1) de commutation que des sorties d'horloges y sont prévues et également du type de sorties d'horloge.

6. Dispositif suivant l'une des revendications 1 à 5, **caractérisé en ce que** le type d'une sortie d'horloge dépend de son type d'organe de connexion, qui dépend à son tour du type des éléments (7, 10) externes raccordés.

7. Dispositif suivant l'une des revendications 1 à 6, **caractérisé en ce que**, pour des éléments (7) externes qui dépendent de la synchronisation du dispositif (1) de commutation d'une installation complexe, il est prévu une commande automatique de la sortie (8) d'horloge, qui peut lui être raccordé.
